Europäisches Patentamt

European Patent Office

Office européen des brevets

(11) Veröffentlichungsnummer: **0 268 094**
**A2**

## (12) EUROPÄISCHE PATENTANMELDUNG

(21) Anmeldenummer: 87115326.8

(22) Anmeldetag: 20.10.87

(51) Int. Cl.⁴: **B01D 53/34**

(30) Priorität: 22.10.86 DE 3635897

(43) Veröffentlichungstag der Anmeldung:
25.05.88 Patentblatt 88/21

(84) Benannte Vertragsstaaten:
AT BE CH DE ES FR GB IT LI NL SE

(71) Anmelder: KRC Umwelttechnik GmbH
Alfred-Nobel-Strasse 20
D-8700 Würzburg 1(DE)

(72) Erfinder: Gutmayer, Harald, Dr. Chem.
Den Haager Weg 16
D-8700 Würzburg(DE)

(74) Vertreter: Werner, Hans-Karsten, Dr. et al
Deichmannhaus am Hauptbahnhof
D-5000 Köln 1(DE)

(54) **Verfahren und Vorrichtung zur Reinigung von Rauchgasen.**

(57) Das Verfahren zur simultanen Abscheidung von Schwefeldioxid, Stickoxiden und weiteren Verunreinigungen aus Rauchgasen mit Hilfe von Elektronenstrahlen und Zugabe eines alkalischen Reagenz erfolgt dadurch, daß das Rauchgas

-in einer ersten Stufe durch eine Sprühtrocknungsanlage geleitet wird, in der die verbrauchte Lösung bzw. Suspension des alkalischen Reagenz zu einem trockenen Reststoff eingetrocknet wird, wobei gleichzeitig das Rauchgas abgekühlt und mit Wasserdampf angereichert wird,

-in einer zweiten Stufe dieses Rauchgas mit Elektronenstrahlen bestrahlt wird und

-in einer dritten Stufe dieses bestrahlte Rauchgas einer nassen alkalischen Wäsche unterzogen wird.

EP 0 268 094 A2

## Verfahren und Vorrichtung zur Reinigung von Rauchgasen

Gegenstand der vorliegenden Erfindung ist ein Verfahren und eine Vorrichtung zur simultanen Abscheidung von Schwefeldioxid, Stickoxiden und weiteren Verunreinigungen aus Rauchgasen mit Hilfe von Elektronenstrahlen und Zugabe eines alkalischen Reagenz.

Es ist bekannt, daß Schwefeldioxid aus Rauchgas durch Waschen mit Ammoniak oder alkalischen Lösungen abgetrennt werden kann (z.B. DE-AS 10 56 771, DE-OS 16 67 447, DE-OS 16 69 319, DE-AS 11 74 933). Dabei entsteht als Endprodukt insbesondere Ammoniumsulfat, das gegebenenfalls aus einer wäßrigen Lösung auskristallisierbar ist.

Ferner ist bekannt, Rauchgase durch eine ionisierende Bestrahlung zu behandeln. Nach DE-OS 24 01 316 wird eine Elektronenbestrahlung angewendet, deren Gesamtdosis 1 Mrad oder mehr beträgt. Die Bestrahlung bewirkt, daß sich vorübergehend reaktionsfähige Radikale bilden und Bestandteile des Rauchgases in Nebel, Aerosole oder feste Partikel umgewandelt werden, die anschließend in einem Abscheider gesammelt werden. Die gleichzeitige Behandlung von Stickoxiden und Schwefeldioxid erfordert jedoch zusätzliche Maßnahmen, wie z.B. die Einhaltung eines bestimmten Verhältnisses von Schwefeldioxid zu Stickoxiden oder eine nachträgliche weitere Entschwefelung.

Gemäß DE-OS 29 52 458 wird dem Rauchgas vor der Elektronenbestrahlung Ammoniak zugeführt. Außerdem wird das Rauchgas durch direkte Berührung mit Wasser oder Lösungen auf eine Reaktionstemperatur von 50 bis 80°C abgekühlt.

Nach DE-OS 30 20 301 wird die Stärke des Elektronenstrahls entsprechend der Abgasmenge eingestellt, und die Konzentrationen von Stickoxid, Schwefeldioxid und Ammoniak werden gemessen, um eine geeignete Ammoniakmenge einzustellen, die für die Umwandlung ausreicht, aber einen Überschuß von Ammonikak vermeidet.

Nach US-PS 4 372 832 wird in das auf 175°C vorgekühlte Rauchgas zur Absenkung der Temperatur unter 100°C und zur Erhöhung der Feuchtigkeit in einem Sprühabsorber eine Flüssigkeit eingesprüht und zugleich ein Reagenz eingeleitet. Im Sprühabsorber erfolgt eine teilweise Entschwefelung. Anschließend erfolgt eine Elektronenbestrahlung und eine weitere Reaktion zwischen den Reagenzien und den sauren nebel-oder aerosolförmigen Schadstoffteilen. Die gebildeten Stoffe sollen an Filtern trocken abgetrennt werden. In der praktischen Anwendung dieses Verfahrens wird als Reagenz eine Verbindung des Calciums eingesetzt und als Endprodukt insbesondere Gips erzeugt. US-PS 4 372 832 nennt als geeignete Reagenzien auch Verbindungen des Natriums und Magnesiums.

Ein Nachteil der vorstehend beschriebenen Verfahren ist, daß aus dem Reaktionsbehälter noch nebel-oder aerosolförmige Stoffe austreten können, die sich an den Filtereinrichtungen als feuchter Niederschlag oder Flüssigkeit absetzen und hier nur schwer zu entfernen sind. Hierzu trägt die erhöhte Feuchtigkeit des abgekühlten Rauchgases bei. Werden als Reagenzien Natrium-oder Magnesiumverbindungen verwendet, so können sich auch die entstehenden Salze wie Natriumsulfat und Magnesiumsulfat in Lösungen an dem Filter oder Abscheider absetzen. Hierdurch wird nicht nur die Abscheidung der Stoffe erschwert, sondern es ist auch eine weitere Behandlung notwendig, bis ein Produkt entsteht, das verwendbar ist oder auf einer Deponie gelagert werden kann.

In der Patentanmeldung P 36 18 208.7 ist ein Verfahren zur Abscheidung von Schwefeldioxid und/oder Stickoxiden aus Rauchgas und Abgas unter Anwendung einer Elektronenbestrahlung vorgeschlagen worden, bei dem als Reagenz ein im wesentlichen trockenes Pulver in den Rauchgasstrom eindosiert wird.

In der Patentanmeldung P 36 23 628.4 sind ein Verfahren und eine Vorrichtung zur simultanen Abscheidung von Schwefeldioxid und Stickoxiden aus Rauchgasen mit Hilfe von Elektronenstrahlen und Zugabe eines alkalischen Reagenz vorgeschlagen worden, bei denen das nur bezüglich Temperatur und Wassergehalt konditionierte Rauchgas in der Bestrahlungskammer auf erhöhte Geschwindigkeiten beschleunigt, dann nach der Bestrahlung das alkalische Reagenz zugegeben wird und aus dem so entstehenden Gemisch in einem Reaktionsraum mit verringerten Geschwindigkeiten feste Reaktionsprodukte gebildet und anschließend abgeschieden werden. Als alkalische Reagenzien werden Ammoniak, Ammoniumhydrogencarbonat, Calciumhydroxid und/oder Calciumcarbonat genannt.

Die Aufgabe der vorliegenden Erfindung besteht darin, ein Verfahren und eine Vorrichtung zur simultanen Abscheidung von Schwefeldioxid, Stickoxiden und weiteren Verunreinigungen aus Rauchgasen mit Hilfe von Elektronenstrahlen und Zugabe eines alkalischen Reagenz zu entwickeln, welche auch für kleinere Kraftwerke und industrielle Feuerungseinrichtungen geeignet sind und daher bei tragbaren Investitions-und Betriebskosten eingesetzt werden können. Das Verfahren soll nach Möglichkeit auch geeignet sein, die Rauchgase hinter Müllverbrennungsanlagen zu reinigen.

Weiterhin sollen nach Möglichkeit keine Abwasserprobleme entstehen und möglichst niedrige Prozeßtemperaturen eingehalten werden, um Wärmerückgewinnungsmöglichkeiten zu erschließen. Trotz simultaner Abscheidung der Schadstoffe sollte nach Möglichkeit nur eine Chemikalie zum Einsatz kommen. Weiterhin dürfen keine Probleme beim Stillstand auftreten und es sollte eigenes Betriebspersonal zur Bedienung einsetzbar sein. Das Endprodukt sollte nach Möglichkeit wiederverwendbar oder zumindest gut deponierbar sein. Ferner ist es eine Aufgabe der vorliegenden Erfindung, bestehende Rauchgasreinigungsanlagen so nachzurüsten, daß sie auch zur Entstickung geeignet sind und abwasserfrei arbeiten.

Diese Aufgabe ist überraschend einfach dadurch lösbar, daß das Rauchgas

-in einer ersten Stufe durch eine Sprühtrocknungsanlage geleitet wird, in der die verbrauchte Lösung bzw. Suspension des alkalischen Reagenz zu einem trockenen Reststoff eingetrocknet wird, wobei gleichzeitig das Rauchgas abgekühlt und mit Wasserdampf angereichert wird,

-in einer zweiten Stufe dieses Rauchgas mit Elektronenstrahlen bestrahlt wird und

-in einer dritten Stufe dieses bestrahlte Rauchgas einer nassen alkalischen Wäsche unterzogen wird.

Als alkalisches Reagenz kommen zwar auch Ammoniak oder Ammoniumcarbonat in Frage, vorzugsweise werden jedoch Calciumhydroxid, Calciumcarbonat, Natriumhydroxid, Magnesiumhydroxid oder Mischungen derselben eingesetzt, da es technisch außerordentlich schwierig ist, das Entweichen von Restmengen von Ammoniak mit den Rauchgasen zu vermeiden.

Die Bestrahlung der aus der Sprühtrocknungsanlage austretenden Rauchgase erfolgt vorzugsweise mit einer Dosis von 0,5 bis 1,5 Mrad.

Insbesondere um mit Elektronenstrahlen arbeiten zu können, die Beschleunigungsspannungen unter 400 kV aufweisen, können auch das Verfahren und die Vorrichtung gemäß Patentanmeldung P 36 23 628.4 zum Einsatz kommen.

Es war nicht ohne weiteres vorherzusehen, daß es technisch und kostenmäßig möglich ist, verbrauchte Lösungen bzw. Suspensionen des alkalischen Reagenz mit Hilfe des ungereinigten Rauchgases in einer Sprühtrocknungsanlage zu einem trockenen Reststoff einzutrocknen und dabei gleichzeitig das Rauchgas so weit abzukühlen und mit Wasserdampf anzureichern, daß es unmittelbar der Bestrahlung mit Elektronenstrahlen unterzogen werden kann.

Nach dem Stand der Technik war es generell üblich, die verbrauchten Lösungen bzw. Suspensionen des alkalischen Reagenz zunächst anzureichern oder sogar abzufiltrieren, ehe sie getrocknet wurden. Das Eindampfen der gesamten Wassermenge des verbrauchten alkalischen Reagenz erschien als maßlose Verschwendung von Energie und wurde daher bisher nie ernsthaft in Betracht gezogen. Überraschenderweise hat sich jetzt herausgestellt, daß der Energiebedarf für eine derartige Sprühtrocknung in etwa der Energiemenge entspricht, die das rohe Rauchgas nach der Luftvorwärmung mit sich führt. Weiterhin hat sich gezeigt, daß die bei der Sprühtrocknung aufgenommene Wasserdampfmenge bereits für den nächsten Bearbeitungsschritt ausreicht, ohne daß es zur vollständigen Sättigung mit Wasserdampf kommt.

Ein weiterer überraschender Vorteil des erfindungsgemäßen Verfahrens besteht darin, daß die nur relativ schwer abscheidbaren, festen Kondensationsprodukte nach der Bestrahlung in der nachfolgenden alkalischen Wäsche völlig absorbiert werden, womit das Problem des Ausfilterns des Staubes entfällt. Der Feinststaubanteil, der mit dem Rauchgas den Sprühtrockner verläßt, stört bei der anschließenden Bestrahlung mit Elektronenstrahlen nicht, sondern wirkt sogar positiv als Kondensationskeime für die sich bildenden Nebeltröpfchen der gebildeten Schwefelsäure und Salpetersäure. Gewünschtenfalls kann jedoch der Feinstaubanteil aus dem Sprühtrockner durch ein Filter abgetrennt werden. Dieses Filter wird somit zwischen der ersten und der zweiten Stufe des Verfahrens, d.h. zwischen dem Sprühtrockner und der Bestrahlungsvorrichtung eingebaut.

In der nachgeschalteten nassen und alkalischen Wäsche findet zunächst eine endgültige Kühlung und Sättigung der Rauchgase mit Wasserdampfe statt. Weiterhin werden die Entstickungsprodukte sowie der Staub abgeschieden. Weiterhin findet eine intensivere Einbindung des verbliebenen Schwefeldioxids statt, wobei gewünschtenfalls noch bei größeren Anlagen eine Oxidationsstufe eingebaut werden kann, in welcher die Sulfite zu Sulfaten oxidiert werden. Staubteilchen aus dem Rauchgas und der Sprühtrocknungsanlage wirken als Kristallisationszentren und werden dadurch vergrößert. Diese größeren Teilchen wirken sich wiederum positiv in der Sprühtrocknungsanlage aus.

Bei dem erfindungsgemäßen Verfahren werden nicht nur Schwefeldioxid und Stickoxide, sondern auch weitere Verunreinigungen wie Chlorid, Fluorid, Feinstäube usw. abgeschieden, so daß ein hochgradig gereinigtes Rauchgas anfällt. Das Verfahren arbeitet abwasserfrei und liefert nur einen einzigen, trockenen und festen Reststoff, in den alle Verunreinigungen eingebunden sind.

Ein weiterer Vorteil des erfindungsgemäßen Verfahrens besteht darin, daß sowohl die Sprühtrockner als auch die Naßwäscher in den verschiedensten Größen und Ausführungen auf dem Markt sind und diese nur noch zusätzlich mit einer Vorrichtung zur Bestrahlung mit Elektronenstrahlen ausgerüstet werden müssen.

Das Verfahren kann daher auch zur Nachrüstung von bereits bestehenden Rauchgasentschwefelungsanlagen verwendet werden, indem diese zusätzlich mit einer Sprühtrocknungsanlage und einer Bestrahlungsvorrichtung versehen werden. Die bisherigen Teile derartiger Anlagen zur Aufbereitung der Reststoffe und des Abwassers können stillgelegt werden.

Aus den bisher vorliegenden Daten geht hervor, daß es bei dem erfindungsgemäßen Verfahren ohne weiteres möglich ist, eine Entstaubung auf maximal 50 mg/Nm$^n$ zu erzielen. Die Entschwefelung beträgt mindestens 95% und die Entstickung mindestens 60%. Die Einbindung von Chloriden und Fluoriden beträgt ca. 99%.

Die erfindungsgemäße Vorrichtung zur Durchführung des Verfahrens besteht aus einer Kombination eines Sprühtrockners (1), einer Bestrahlungsvorrichtung (2), eines Naßwäschers (3) und einer Rückleitung für verbrauchte Lösung bzw. Suspension des alkalischen Reagenz (4).

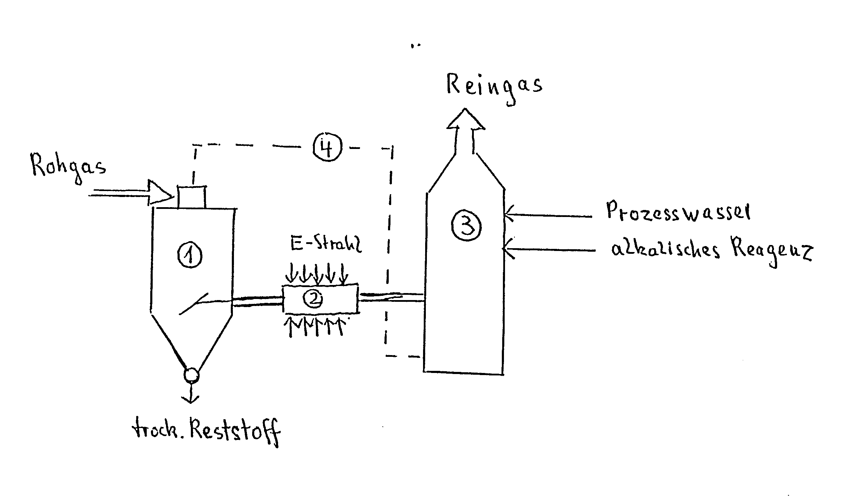

Diese Vorrichtung ist in der anliegenden Figur 1 schematisch dargestellt.

Die erfindungsgemäße Vorrichtung ist kostenmäßig sehr günstig, da bis zum Naßwäscher die Anlage oberhalb des Taupunktes betrieben wird. Da die Chlorid-und Fluoridabscheidung bereits größtenteils im Sprühtrockner erfolgt, kann auch der apparative Teil der Naßwäsche aus preiswerterem Material gebaut werden.

Sofern zwischen dem Sprühtrockner (1) und der Bestrahlungsvorrichtung (2) ein nicht eingezeichnetes Filter vorhanden ist, fällt auch in diesem feinteiliges, trockenes Endprodukt an, das separat oder zusammen mit dem trockenen Reststoff aus dem Sprühtrockner gewonnen, gelagert, deponiert oder weiterverarbeitet werden kann. Als Filter kommen prinzipiell alle üblichen Staubfilter und Elektrofilter in Frage.

**Ansprüche**

1. Verfahren zur simultanen Abscheidung von Schwefeldioxid, Stickoxiden und weiteren Verunreinigungen aus Rauchgasen mit Hilfe von Elektronenstrahlen und Zugabe eines alkalischen Reagenz, dadurch gekennzeichnet, daß das Rauchgas

-in einer ersten Stufe durch eine Sprühtrocknungsanlage geleitet wird, in der die verbrauchte Lösung bzw. Suspension des alkalischen Reagenz zu einem trockenen Reststoff eingetrocknet wird, wobei gleichzeitig das Rauchgas abgekühlt und mit Wasserdampf angereichert wird,

-in einer zweiten Stufe dieses Rauchgas mit Elektronenstrahlen bestrahlt wird und

-in einer dritten Stufe dieses bestrahlte Rauchgas einer nassen alkalischen Wäsche unterzogen wird.

2. Verfahren gemäß Anspruch 1, dadurch gekennzeichnet, daß als alkalisches Reagenz Calciumhydroxid, Calciumcarbonat, Natriumhydroxid, Magnesiumhydroxid oder Mischungen derselben eingesetzt werden.

3. Verfahren nach Ansprüchen 1 oder 2, dadurch gekennzeichnet, daß die Bestrahlung mit einer Dosis von 0,5 bis 1,5 Mrad erfolgt.

4. Verfahren nach einem der Ansprüche 1 bis 3, dadurch gekennzeichnet, daß zwischen der ersten und der zweiten Stufe der Gasstrom filtriert wird.

5. Vorrichtung zur simultanen Abscheidung von Schwefeldioxid, Stickoxiden und weiteren Verunreinigungen aus Rauchgasen mit Hilfe von Elektronenstrahlen und Zugabe eines alkalischen Reagenz gemäß einem der Ansprüche 1 bis 3, bestehend aus der Kombination eines Sprühtrockners (1), einer Bestrahlungsvorrichtung (2), eines Naßwäschers (3) und einer Rückleitung für verbrauchte Lösung bzw. Suspension des alkalischen Reagenz (4).

6. Vorrichtung gemäß Anspruch 5, dadurch gekennzeichnet, daß sie zwischen dem Sprühtrockner (1) und der Bestrahlungsvorrichtung (2) einem Filter aufweist.

Rohgas

trock. Reststoff

E-Strahl

① ② ③ ④

Reingas

Prozesswasser

alkalisches Reagenz